# EUROPÄISCHE PATENTSCHRIFT

(11) **EP 1 617 080 B1**
(45) Veröffentlichungstag und Bekanntmachung des Hinweises auf die Patenterteilung: **17.11.2010**
(21) Anmeldenummer: 04103377.0
(22) Anmeldetag: 15.07.2004
(51) Int. Cl.: F04C 2/10, F04C 2/08, F16N 13/20

(54) **Ölpumpe**
Oil pump
Pompe à huile

(43) Veröffentlichungstag der Anmeldung: 18.01.2006
(73) Patentinhaber: Ford Global Technologies, LLC, A subsidary of Ford Motor Company, Dearborn, MI 48126 (US)
(72) Erfinder: Trzoska, Peter, 59858 Köln (DE)
(74) Vertreter: Drömer, Hans-Carsten

(56) Entgegenhaltungen:
- FR-A- 2 588 619
- GB-A- 191 509 359
- US-A- 2 688 927
- US-A- 3 087 436
- US-A- 4 185 717
- US-A1- 2003 113 217
- US-B1- 6 679 692

## Beschreibung

Die Erfindung betrifft eine Ölpumpe mit einem Radsatz, der ein Innenrad und ein Außenrad aufweist, die verzahnt sind, wobei der Radsatz auf einem Innengehäuse angeordnet ist und durch in einer X-Richtung zueinander beabstandete Deckelscheiben eingeschlossen ist, die auf dem Innengehäuse gelagert sind.

Derartige Ölpumpen sind z. B. als indirekt angetriebene Ölpumpen bekannt. Indirekt angetriebene Ölpumpen bestehen aus einem Gehäuse und einem Deckel, in denen eine Welle gelagert ist. Auf der Welle ist ein Innenrad aufgeschrumpft, welches das Außenrad antreibt. Der Radsatz, bestehend aus dem außenverzahnten Innenrad und dem innenverzahnten Außenrad, ist von dem Gehäuse und dem Deckel umschlossen. Außerhalb der Pumpe kann ein Antriebskettenrad auf der Welle angeordnet sein. In dem Gehäuse bzw. dem Deckel ist ein Überdruckventil mit Feder und Stopfen angeordnet, wobei Saug- und Druckkanäle sowie Bohrungen zur Aufnahme von Befestigungsschrauben vorgesehen sind.

Die EP 1 150 014 A2 betrifft eine Ölpumpe für Umlaufschmierung von Brennkraftmaschinen, bestehend im Wesentlichen aus einem Innenrotor mit wellenförmiger Außenverzahnung und einem Außenrotor, dessen wellenförmige Innenverzahnung mit der Außenverzahnung des Innenrotors kämmt. Die Mittelpunkte von Innen- und Außenrotor sind um eine gewisse Exzentrizität versetzt. Der Innen- und Außenrotor ist stirnseitig dichtend vom Gehäuse umgeben. Die Lagerung des Außenrotors erfolgt über seine Umfangsfläche unmittelbar im Gehäuse. Der Antrieb erfolgt über den Außenrotor, wobei der Innenrotor mittels einer Welle frei drehbar im Gehäuse gelagert ist.

Die US 3,407,741 offenbart eine Schmierölpumpe für einen Motor mit einer Kurbelwelle, die ein rundes Außenrad aufweist. Das Außenrad ist drehbar an dem Motor angeordnet und mit der Kurbelwelle verbunden. Das Außenrad weist eine Innenverzahnung auf. Ein Innenrad, das einen kleineren Durchmesser als das Außenrad aufweist, ist in diesem mit einem Versatz zur Drehachse des Außenrades angeordnet. Das Innenrad weist eine Außenverzahnung auf, wobei weniger Außenzähne als Innenzähne des Außenrades vorgesehen sind.

Außenverzahnung greift in die Innenverzahnung ein. Zwischen der Innen- bzw. Außenverzahnung ist ein Pumpbereich gebildet. Das Innenrad wird durch das Außenrad angetrieben, indem die Außenverzahnung in die Innenverzahnung eingreift. Mittel, die einen Öleinlaß bilden, stehen mit einem ersten Abschnitt des Pumpbereichs in Verbindung, wobei Mittel einen Ölauslaß bilden, der mit einem zweiten Abschnitt des Pumpbereichs in Verbindung steht.

Als ein Hauptnachteil der bekannten Ölpumpen ist anzusehen, daß diese eine sehr hohe Leckagerate aufweisen. Zudem wird bei den herkömmlichen Ölpumpen, die beispielsweise mit Alugehäusen und Sinterrädem ausgestaltet sind, beobachtet, daß diese Leckagerate sehr groß ist, da vorhandene Spalte durch Wärmedehnung stark vergrößert werden. Zudem sind die herkömmlichen Ölpumpen in ihrer Konstruktion relativ groß, so daß das Pumpengewicht selbst relativ groß anzusetzen ist.

Die GB 09359 offenbart eine Ölpumpe mit einem Radsatz der ein Innenrad und ein Außenrad aufweist. Das Innenrad und das Außenrad sind verzahnt, wobei der Radsatz auf einem Innengehäuse angeordnet ist und durch beabstandete Deckelscheiben eingeschlossen ist.

Die US 4,185,717 beschreibt ebenfalls eine Ölpumpe. Einer Schraube wird in einen Zylinderblock geschraubt. Der Schraube ist eine Abdeckscheibe zugeordnet, so dass eine äußere Oberfläche eines äußeren Zahnrads abgedichtet ist.

Der Erfindung liegt die Aufgabe zugrunde, eine Ölpumpe der eingangs genannten Art dahin gehend zu verbessern, daß mit einfachen Mitteln eine Leckage zumindest an einem Außenumfang und an Stirnflächen vermieden wird.

Erfindungsgemäß wird die Aufgabe durch die Merkmale des Anspruchs 1 gelöst.

Somit wird eine Innengehäuse-Ölpumpe zur Verfügung gestellt, die eine sehr geringe Leckagerate aufweist, da das Außenrad mit den beiden Deckelscheiben fest verbunden ist, so daß eine Leckage an dem Außenumfang und an Stirnflächen vermieden wird.

Zur Herstellung einer kraftformschlüssigen Verbindung ist es günstig im Sinne der Erfindung, wenn die jeweiligen Deckelscheiben mit dem Außenrad verschraubt sind.

Um zu erreichen, daß die Ölpumpe angetrieben wird, ist zweckmäßig vorgesehen, daß zumindest eine Deckelscheibe an ihrem Außenumfang verzahnt ist, so daß die verzahnte Deckelscheibe als Antriebskettenrad ausgestaltet ist.

Günstig im Sinne der Erfindung ist, wenn das Innengehäuse Saugkanäle und Druckkanäle aufweist, wobei Bohrungen zur Aufnahme von Befestigungsschrauben in dem Innengehäuse angeordnet sind, und wobei dem Innengehäuse ein Überdruckventil, eine Feder und ein Deckel zugeordnet sind.

Weitere vorteilhafte Ausgestaltungen sind in den Unteransprüchen und der folgenden Figurenbeschreibung offenbart. Es zeigen:
- Fig. 1: eine Seitenansicht einer Innengehäuse-Ölpumpe,
- Fig. 2: einen Querschnitt entlang der Linie A aus Figur 1,

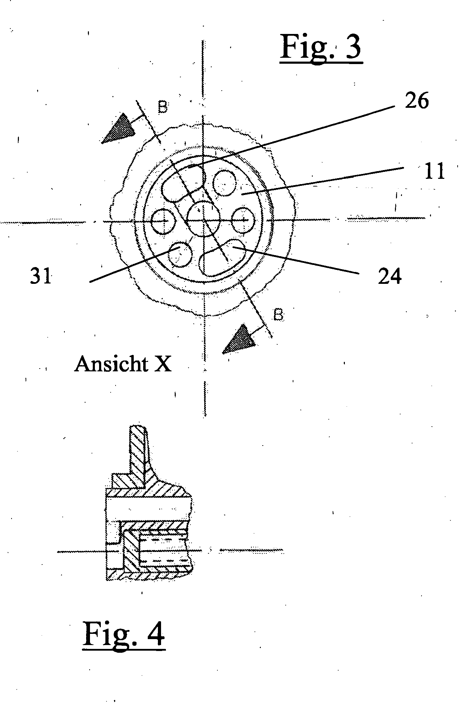

- Fig. 3: eine Vergrößerung des Innengehäuses aus Figur 1,
- Fig. 4: einen Querschnitt entlang der Linie B aus Figur 1.

In den unterschiedlichen Figuren sind gleiche Teile stets mit denselben Bezugszeichen versehen, so daß diese in der Regel auch nur einmal beschrieben werden.

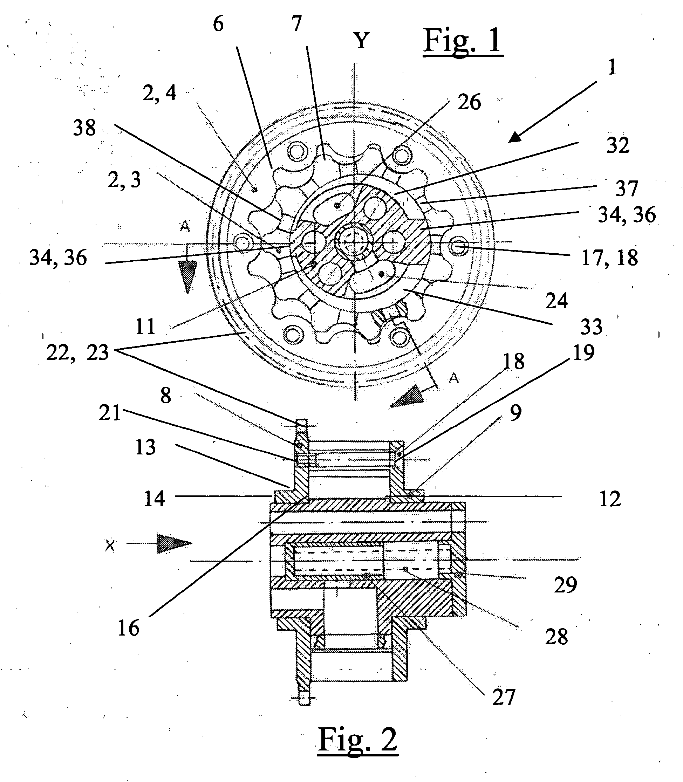

Figur 1 zeigt eine indirekt antreibbare Innengehäuse-Ölpumpe 1. Der Ölpumpe 1 ist ein Radsatz 2 zugeordnet, der ein Innenrad 3 und ein Außenrad 4 aufweist, die verzahnt sind. Das Außenrad 4 weist eine Innenverzahnung 6 auf, wobei das Innenrad 3 eine Außenverzahnung 7 aufweist. In dem dargestellten Ausführungsbeispiel besitzt die Außenverzahnung 7 des Innenrades 3 einen Zahn weniger als die Innenverzahnung 6 des Außenrades 4. Hierdurch entstehen unterschiedlich große Spalte, so daß eine Pumpwirkung erzielt wird.

Der Radsatz 2 ist durch im Querschnitt gesehen (Figur 2) in einer X-Richtung zueinander beabstandete Deckelscheiben 8 bzw. 9 eingeschlossen. Die Deckelscheiben 8 und 9 sind auf einem Innengehäuse 11 drehbar gelagert. Hierzu weist das Innengehäuse 11 an seinem Außenumfang im Querschnitt gesehen stufenförmige Anschläge 12 auf.

Der Figur 2 ist zu entnehmen, daß die Deckelscheiben 8 bzw. 9 im Querschnitt gesehen L-förmig ausgestaltet sind. Die Deckelscheiben 8 bzw. 9 sind derart auf dem Innengehäuse 11 gelagert, daß diese mit ihren jeweiligen Fußschenkeln 13 zueinander entgegengesetzt orientiert sind. Mit ihren jeweils freien Enden 14 sind die Fußschenkel 13 von einer Mittellinie Y weggerichtet orientiert. Mit einer zum freien Ende 14 gegenüberliegenden Anlageseite 16 liegen die Deckelscheiben 8 bzw. 9 jeweils an dem zugeordneten Anschlag 12 an. Die Deckelscheiben 8 und 9 stützen sich somit auf dem Innengehäuse 11 ab.

Die Deckelscheiben 8 und 9 sind kraftformschlüssig mit dem Außenrad 4 verbunden, vorzugsweise verschraubt. Das Außenrad 4 weist Durchgangsbohrungen 17 auf, durch die eine Schraube 18, vorzugsweise eine Bolzenschraube gesteckt ist. In dem dargestellten Ausführungsbeispiel weist die Deckelscheibe 9 eine gewindelose Bohrung 19 auf, wobei die Deckelscheibe 8 eine zum Gewinde der Schraube 18 komplementäre Gewindebohrung 21 aufweist, so daß die beiden Deckelscheiben 8 und 9 kraftformschlüssig mit dem Außenrad 4 verschraubt sind. Die Bohrung 19 weist eine konusförmige Verbreiterung zur Aufnahme eines Schraubenkopfes auf.

In dem dargestellten Ausführungsbeispiel weist die Deckelscheibe 8 an ihrem Außenumfang 22 eine Außenverzahnung 23 auf, so daß die Deckelscheibe 8 als Antriebskettenrad ausgestaltet ist.

Das Innengehäuse 11 weist Saugkanäle 24 und Druckkanäle 26 auf. Zudem sind dem Innengehäuse 11 ein Überdruckventil 27, eine Feder 28 sowie ein Deckel 29 und Bohrungen 31 zur Aufnahme von Befestigungsschrauben zugeordnet. Das Innengehäuse 11 wird mittels der Befestigungsschrauben, die durch die Bohrungen 31 gesteckt werden vorzugsweise mit einem nicht dargestellten Zylinderblock verschraubt, so daß das Innengehäuse 11 stationär in einem Kurbelgehäuse gelagert ist.

Das Außenrad 4 wird angetrieben und nimmt bei seiner Drehbewegung das Innenrad 3 mit. Das Innenrad 4 ist drehbar auf dem Innengehäuse 11 gelagert und weist einen gewissen Achsversatz zur Drehachse des Außenrades 4 auf. Dadurch, daß das Innenrad 3 in dem dargestellten Ausführungsbeispiel einen Zahn weniger aufweist als das Außenrad 4, wird bei der Drehbewegung der beiden Räder 3,4 eine Pumpwirkung durch unterschiedlich große Spalte zwischen den beiden Rädern 3,4 erzeugt.

Das Innengehäuse 11 weist zur Trennung einer Druckseite 32 von einer Saugseite 33 Trennflächen 34 auf, die jeweils bereichsweise an einem Innenumfang 36 des Innenrades 3 anliegen. Zur Verbindung der Spalte mit der jeweiligen Druck- bzw. Saugseite 32 bzw. 33 sind Bohrungen 37 in dem Innenrad 3 vorgesehen, die bevorzugt in jeweiligen Vertiefungen 38 zwischen den jeweiligen Zähnen des Innenrades 3 angeordnet sind.

Durch die kraftformschlüssige Verschraubung des Außenrades 4 mit den beiden Deckelscheiben 8 und 9 wird eine Innengehäuse-Ölpumpe 1 zur Verfügung gestellt, bei der eine Leckage an dem Außenumfang und an Stirnflächen vermieden wird. Zudem ist eine Leckage am Innenrad 3 weitgehend vermieden, da Spalte zu den Deckelscheiben 8 und 9 mit steigender Temperatur unverändert bleiben, wobei eine gewisse Leckage allerdings gewünscht ist, um beispielsweise die Fußschenkel 13 der Deckelscheiben 8 und 9 hinreichend zu schmieren.

Durch die erfindungsgemäße Ausgestaltung der Innengehäuse-Ölpumpe 1 wird zudem eine newtonsche Reibung durch den festen Verbund des Außenrades 4 mit den Deckelscheiben 8 und 9 verhindert. An Stirnflächen des Innenrades 3 treten dagegen lediglich minimale newtonsche Reibungen auf, da eine Relativgeschwindigkeit zu den Deckelscheiben 8 und 9 sehr klein ist, denn das Außenrad 4 nimmt das Innenrad 3 gleichsinnig mit.

Da bei der erfindungsgemäßen Ausgestaltung der Innengehäuse-Ölpumpe auf eine Welle und auf eine Außenummantelung des Radsatzes 2 verzichtet werden kann, weist die Innengehäuse-Ölpumpe 1 zudem eine vorteilhaft kleine Ausdehnung auf. Zudem sind Saug- und Druckkanäle 24 und 26 sowie Bohrungen 31 für Befestigungsschrauben und das Überdruckventil 27 im Innengehäuse 11 selbst angeordnet. Durch die kleine Baugröße der Innengehäuse-Ölpumpe 1 wird zudem vorteilhaft ein entsprechend geringes Pumpengewicht erreicht.

### Bezugszeichenliste:

- 1: Ölpumpe
- 2: Radsatz
- 3: Innenrad
- 4: Außenrad
- 5:
- 6: Innenverzahnung v. 4
- 7: Außenverzahnung v. 3
- 8: Deckelscheibe
- 9: Deckelscheibe
- 10:
- 11: Innengehäuse
- 12: Anschläge
- 13: Fußschenkel v. 8,9
- 14: freies Ende v. 13
- 15:
- 16: Anlageseite
- 17: Durchgangsbohrungen
- 18: Schraube
- 19: gewindelose Bohrung
- 20:
- 21: Gewindebohrung
- 22: Außenumfang v. 8
- 23: Außenverzahnung v. 22
- 24: Saugkanal
- 25:
- 26: Druckkanal
- 27: Überdruckventil
- 28: Feder
- 29: Deckel
- 30:
- 31: Bohrungen in 11
- 32: Druckseite
- 33: Saugseite
- 34: Trennflächen
- 35:
- 36: Innenumfang v. 3
- 37: Bohrungen in 3
- 38: Vertiefungen in 3

## Patentansprüche

1. Ölpumpe mit einem Radsatz (2), der ein Innenrad (3) und ein Außenrad (4) aufweist, die verzahnt sind, wobei der Radsatz (2) auf einem Innengehäuse (11) angeordnet ist und durch in einer X-Richtung zueinander beabstandete Deckelscheiben (8, 9) eingeschlossen ist, die auf dem Innengehäuse (11) gelagert sind, wobei
die Deckelscheiben (8, 9) mit dem Außenrad (4) verschraubt sind, und wobei das Innengehäuse (11) Saugkanäle (24) und Druckkanäle (26) aufweist, **dadurch gekennzeichnet daß** Bohrungen (31) zur Aufnahme von Befestigungsschrauben in dem Innengehäuse (11) angeordnet sind, und wobei dem Innengehäuse (11) ein Überdruckventil (27), eine Feder (28) und ein Deckel (29) zugeordnet ist.

2. Ölpumpe nach Anspruch 1,
**dadurch gekennzeichnet, daß**
zumindest eine Deckelscheibe (8, 9) an ihrem Außenumfang (22) verzahnt ist, so daß die Deckelscheibe (8, 9) als Antriebskettenrad ausgestaltet ist.

## Claims

1. Oil pump with a wheel set (2) which has an inner wheel (3) and an outer wheel (4) which are toothed, the wheel set (2) being arranged on an inner casing (11) and being enclosed by cover discs (8, 9) which are spaced apart from one another in an X-direction and are mounted on the inner casing (11), the cover discs (8, 9) being screwed to the outer wheel (4), and the inner casing (11) having suction ducts (24) and delivery ducts (26), **characterized in that** bores (31) for the reception of fastening screws are arranged in the inner casing (11), and the inner casing (11) being assigned a pressure relief valve (27), a spring (28) and a cover (29).

2. Oil pump according to Claim 1, **characterized in that** at least one cover disc (8, 9) is toothed on its outer circumference (22), so that the cover disc (8, 9) is configured as a driving chain wheel.

## Revendications

1. Pompe à huile comprenant un jeu de roues (2), qui présente une roue interne (3) et une roue externe (4) qui sont pourvues de dentures, le jeu de roues (2) étant disposé sur un boîtier interne (11) et étant enfermé par des disques de recouvrement (8, 9) espacés l'un de l'autre dans une direction X, qui sont montés sur le boîtier interne (11),
les disques de recouvrement (8, 9) étant vissés à la roue externe (4) et le boîtier interne (11) présentant des canaux d'aspiration (24) et des canaux de pression (26),
**caractérisée en ce que** des alésages (31) pour recevoir des vis de fixation sont disposés dans le boîtier interne (11), et une soupape de surpression (27), un ressort (28) et un recouvrement (29) sont associés au boîtier interne (11).

2. Pompe à huile selon la revendication 1,
**caractérisée en ce**
**qu'**au moins un disque de recouvrement (8, 9) est pourvu d'une denture au niveau de sa périphérie extérieure (22), de sorte que le disque de recouvrement (8, 9) soit configuré sous forme de pignon d'entraînement.
